# EUROPEAN PATENT SPECIFICATION

(11) **EP 1 843 990 B1**
(45) Date of publication and mention of the grant of the patent: **16.03.2016**
(21) Application number: 05805694.6
(22) Date of filing: 11.11.2005
(51) Int. Cl.: C04B 40/00, C04B 28/02

(54) **LIQUID ACCELERATOR**
FLÜSSIGER BESCHLEUNIGER
ACCELERATEUR LIQUIDE

(30) Priority: 14.01.2005 JP 2005008212
(43) Date of publication of application: 17.10.2007
(73) Proprietor: Construction Research & Technology GmbH, 83308 Trostberg (DE)
(72) Inventor: ANGELSKAR, Terje, CH-8962 Berg Dietikon (CH); OGAWA, Hideo, Chigasaki-shi Kanagawa-ken (JP); IWATA, Raita, Chigasaki-shi, Kanagawa-ken (JP)
(86) International application number: PCT/EP2005/012107
(87) International publication number: WO 2006/074739

(56) References cited:
- EP-A- 1 167 317
- WO-A-03/106375
- WO-A-2005/028398
- WO-A-2005/040059

## Description

The present invention relates to a liquid accelerator. Specifically, the present invention relates to a liquid accelerator which excels in its accelerating effect, thick-coating capability, strength development characteristics, and the workability of concrete-spray nozzle even for concrete with a lower cement content per unit volume (about 360 kg/m³) with a smaller amount of usage than that of conventional products, and also excels in the storage stability at lower and higher temperatures.

Conventionally, to prevent the collapses of exposed terrain surfaces such as a slope face and a tunnel excavation, spraying processes have been used in which accelerated mortar or concrete which is prepared by adding an accelerator to a cement composition such as mortar and concrete is sprayed on the spray surface. Generally, as the accelerator, alkali metal salts (sodium and potassium) of aluminate, silicic acid, carbonic acid, etc. have been widely used. Since these compounds have strong alkalinity, they have adverse effects on the human body in the environment of spray operation; for example, they may attack the skin and cause eye inflammation or corneal corrosion thereby impairing visual acuity.

Moreover, alkaline accelerators containing alkali metals such as sodium or potassium may pose the risk of inducing an alkali-aggregate reaction with the aggregates in concrete and, therefore, are not preferable in the viewpoint of durability of the concrete.

Moreover, since sprayed concrete generally includes a large cement content per unit volume thereby introducing a large quantity of alkali (sodium and potassium) from the cement and, in addition to it, has a high ratio of fine aggregates, there is a high probability of causing an alkali-aggregate reaction. Thus, when a reactive aggregate was used for sprayed concrete, there was a high risk of causing cracks in the concrete after it was cured thereby impairing the durability. As the countermeasure of this, attempts have been made to use aggregates which would not contribute to the alkali-aggregate reaction or to use low-alkali type cement; however, it was difficult to fully prevent the problem.

Under the current circumstances as described above, acidic liquid accelerators composed of aluminum sulfate, aluminum hydroxide, and the fluorides of aluminum have been proposed.

For example, a concrete accelerator consisting of an acidic or basic solution of aluminum, lithium silicate, and lithium aluminate has been proposed (see, for example, patent document 1). Moreover, an accelerator being free of alkalis and chlorides and consisting of nitrate, sulfate, glycolate, lactate, or the like of aluminum, a complex forming agent, and a corrosion inhibitor has been proposed (see, for example, patent document 2).

Furthermore, an accelerator that contains water soluble fluoride and does not contain aluminum salts, sulfates, alkali metals and chlorides has been proposed (see, for example, document 3). Furthermore, a liquid accelerator containing aluminum, sulfur, sodium, and fluorine has been proposed (see, for example, patent document 4). There has been further proposed an accelerator that consists of a fluoride-containing aqueous aluminum salt, which is obtained through the reaction between the aluminum hydroxides or aluminum oxides and hydrofluoric acid, and a sulfate-containing aqueous aluminum salt such as aluminum sulfate and basic aluminum sulfate, and that does not contain alkali metals and chlorides (see, for example, patent document 5).

However, the above described technologies have not provided a liquid accelerator having a sufficient accelerating effect and solution stability. The present inventors has focused their attention on the effects of alkali metals for improving early strength development characteristics of concrete, and proposed, in Japanese Patent Application No.2003-62114, a liquid accelerator that contains, as total alkali, 1 to 8.5% of alkali metal salts such as aluminum sulfate, alkanolamine, alkylene diamine, hydrofluoric acid, and alkali metal salts such as sodium hydroxide, potassium hydroxide, sodium carbonate, potassium carbonate, sodium sulfate, potassium sulfate. However, although this liquid accelerator excelled in its accelerating effect and early strength development characteristics for concrete compositions with a higher cement content per unit volume, it had a problem in that its acceleration performance was insufficient in concrete compositions with a lower cement content and it had a tendency to precipitate crystals at lower temperatures thereby degrading solution stability.
[Patent document 1] Jp,A2001-130935.
[Patent document 2] Jp,A2001-180994.
[Patent document 3] Jp,A2002-29801.
[Patent document 4] Jp,A2002-47048.
[Patent document 5] Jp,A2002-80250.

### [Disclosure of the Invention]

### [Problem to be Solved by the Invention]

D2 (WO 03/106375 A) discloses an aluminum sulfate, at least one of an alkanolamine and an alkylene diamine or triamine, hydrofluoric acid, at least one of sodium hydroxide, potassium hydroxide, lithium hydroxide, magnesium hydroxide, lithium carbonate, sodium carbonate, potassium carbonate, magnesium carbonate, sodium sulfate, potassium sulfate, magnesium sulfate, lithium sulfate, C₁ - C₁₀ aliphatic mono- and dicarboxylic acids and their metal salts, aluminum hydroxide and at least one of phosphoric acid and phosphorous acid. The sprayed cementitious compositions utilize accelerator compositions that work well with an unusually wide variety of cements, including Japanese cements, however with which other alkali-free accelerators give less satisfactory results.

Accordingly, it is an object of the present invention to provide a liquid accelerator which excels in its accelerating effect, thick-coating capability, strength development characteristics, and the workability of concrete-spray nozzle even for concrete with a lower cement content per unit volume, and also excels in the storage stability at lower and higher temperatures for a longer period of time.

### [Means for Solving the Problem]

The present inventors have conducted eager investigation to solve the above described problems and have found that all those problems may be solved by using a liquid accelerator according to claim 1.

The present invention also relates to the above described liquid accelerator in which aluminum compounds and hydrofluoric acid are used in an A/F ratio of 0.35 to 4.5, where the A/F ratio is the ratio of the number of moles of Al₂O₃ equivalent (A) to that of F⁻ equivalent (F).

The present invention also relates to the above described liquid accelerator in which aluminum compounds and sulfuric acid compounds are used in an A/S ratio of 0.38 to 0.60, where the A/S ratio is the ratio of the number of moles of Al₂O₃ equivalent (A) to that of SO₃ equivalent (S).

Furthermore, the present invention relates to the above described liquid accelerator in which total alkali is less than 1%.

The present invention further relates to the described liquid accelerator in which 15 to 35% by mass of aluminum sulfate, 1 to 5% by mass of hydrofluoric acid, less than 20% by mass of aluminum hydroxide, and 0. 5 to 5% by mass of phosphorous acid and/or organic acid salts thereof are used for the total amount of the liquid accelerator.

The present invention further relates to the above described liquid accelerator in which oxalic acid and/or a metallic salt thereof are contained.

The present invention further relates to the above described liquid accelerator in which 0.5 to 10% by mass of oxalic acid and/or a metallic salt thereof are used for the total amount of the liquid accelerator.

The present invention further relates to the above described liquid accelerator wherein a further source of SO₃ is one or more kinds of sulfuric acid compounds selected from the group consisting of sulfuric acids, lithium sulfates, sodium sulfates, and potassium sulfates.

The present invention further relates to the above described liquid accelerator wherein one or more members selected from the group consisting of C₁ to C₁₀ organic monocarboxylic and dicarboxylic acids and metallic salts thereof are contained.

The present invention further relates to the above described liquid accelerator wherein one or more members selected from the group consisting of alkanolamine, alkylene diamine, and alkylene triamine are contained.

The present invention further relates to the use of the above described liquid accelerator for sprayed mortar or concrete applied to a dry or wet spraying process.

The present invention further relates to a process of dry or wet spraying wherein the above described liquid accelerator is added to a cement composition such as mortar or concrete in a transport pipe, a watering nozzle, or a spray nozzle either directly to the mixture by means of an accelerator feed device, or to the water content.

The present invention further relates to a process of dry or wet spraying characterized in that the above described liquid accelerator is added to base mortar or concrete which is added with a high-range AE water-reducing agent and/or a retarder of polycarbonic acid base and which is applied to the spraying process.

### [Advantages of the Invention]

The liquid accelerator of the present invention can, by being added with phosphorous acid and/or organic acid salts thereof, provide excellent accelerating effect, thick-coating capability, strength development characteristics, as well as the workability of concrete-spray nozzle even for concrete with a lower cement content per unit volume with a smaller amount of usage than that of conventional products, and also can provide excellent storage stability at lower and higher temperatures for a longer period of time. Further, the liquid accelerator of the present invention can enhance its effect as a liquid accelerator by being prepared, in addition to in the above described conditions, in a specific A/F ratio (molar ratio) or a specific A/S ratio (molar ratio), or added with oxalic acid and/or metallic salts thereof.

Since the accelerator of the present invention utilizes a fluoride-containing aqueous aluminum complex and thereby provides a good workability in spraying without excessively raising the early accelerating effect, it makes it possible to prevent the exfoliation of concrete during concrete spraying and apply a thick coating of concrete.

Moreover, since the above described fluoride-containing aqueous aluminum complex is obtained by adding hydrofluoric acid to aluminum sulfate, the accelerator of the present invention can be prepared by using less hydrofluoric acid than conventional methods in which aluminum compounds other than aluminum sulfate are used, and is therefore more economical and less hazardous in its preparation.

### [The Best Mode for Carrying out the Invention]

Hereinafter, the present invention will be described in more detail.

Aluminum sulfate to be used in the present invention may be one which is generally used as accelerating agent, and it may be either fully or partly hydrated. A typical grade thereof is 17% aluminum sulfate (Al₂(So₄)₃ 14.3H₂O) (referred to as such because of the aluminum oxide content) and, when using a different grade, a proper quantity may be calculated based on this grade. Also, it is preferable that aluminum sulfate is contained as Al₂(SO₄)₃ in an amount of 15 to 35% by mass of the total liquid accelerator.

The hydrofluoric acid to be used in the present invention is generally used as a HF aqueous solution of about 40 to 55% by mass. And the proportion of hydrofluoric acid (as HF) to be reacted with aluminum sulfate is preferably 1 to 5% by mass of the total liquid accelerator.

The present invention utilizes a fluoride-containing aqueous aluminum complex, which is obtained through the reaction between aluminum sulfate and hydrofluoric acid wherein 15 to 35% by mass of aluminum sulfate is reacted with 1 to 5% by mass of hydrofluoric acid, and which would provide a good solution stability at low temperatures for a long term.

Since the above described fluoride-containing aqueous aluminum complex is obtained by adding hydrofluoric acid to aluminum sulfate unlike a conventional manner in which aluminum compounds are added to hydrofluoric solution, there is little heat of reaction generated and its manufacturing is less hazardous and safer.

The aluminum hydroxide to be used in the present invention may be amorphous aluminum hydroxide that is commonly used as accelerating agent, and is preferably contained up to 20% by mass of the liquid accelerator. It is also possible to use inexpensive crystalline aluminum hydroxides; however, they degrade the solution stability at low temperatures due to their low solubility and therefore cannot provide the same level performance as that of the amorphous type.

The liquid accelerator of the present invention is prepared such that aluminum compounds and hydrofluoric acid are contained preferably in an A/F ratio (molar ratio) of 0.35 to 4.5 and more preferably 0.45 to 2.0, where the A/F ratio is the ratio of the number of moles of Al₂O₃ equivalent (A) to that of F⁻ equivalent (F). When the ratio of Al₂O₃/F⁻ is within these ranges, the liquid accelerator will have an excellent very-early delaying effect and accelerating effect thereby improving the thick-coating capability and the strength development characteristics of sprayed concrete and also preventing the deposit of concrete onto the inner surface of the spray nozzle. The adjustment of A/F (molar ratio) in the present invention may be performed by means of the contents of aluminum sulfate, hydrofluoric acid and aluminum hydroxide; however, other aluminum compounds can also be used.

The liquid accelerator of the present invention is added with phosphorous acid and/or organic acid salts thereof to prevent the concrete from becoming clouded at high temperatures and improve its storage stability. As used in the present invention, one or more kinds selected from the group consisting of phosphorous acid and/or organic acid salts thereof are 0.5 to 5% by mass, more preferably 1.5 to 3% by mass of the total amount of the liquid accelerator.

The liquid accelerator of the present invention is prepared such that aluminum compounds and sulfuric acid compounds are contained in an A/S ratio of 0.38 to 0.60 and more preferably 0.40 to 0.55, where the A/S ratio is the ratio of the number of moles of Al₂O₃ equivalent (A) to that of SO₃ equivalent (S). When the A/S ratio is within these ranges, the liquid accelerator exerts an excellent early accelerating effect and strength development characteristic. Moreover, as used in the liquid accelerator of the present invention, the source of SO₃ for controlling A/S includes sulfuric acid compounds such as sulfuric acid, aluminum sulfate and lithium sulfate, and one or more kinds of sodium sulfate and potassium sulfate may be used in an amount such that the total alkali is less than 1%. The preferable proportion of the sulfuric acid compounds is 15 to 35% by mass of the total liquid accelerator.

In the liquid accelerator of the present invention, the total alkali amount is preferably less than 1% and more preferably less than 0.5%. The total alkali (%) as used in the present invention is expressed by Na₂O_{eq} = sodium oxide (Na₂O) + 0. 658 potassium oxide (K₂O). When the total alkali in the liquid accelerator is within this range, the liquid accelerator exhibits good solution stability at low temperatures, does not cause crystal precipitation, and favorably behaves against alkali aggregation reaction.

Further, the liquid accelerator of the present invention utilizes 15 to 35% by mass of aluminum sulfate, 1 to 5% by mass of hydrofluoric acid, not more than 20% by mass of aluminum hydroxide, and 0.5 to 5% by mass of phosphorous acid and/or organic acid salts thereof for the total liquid accelerator.

The liquid accelerator of the present invention may contain oxalic acid and/or metallic salts thereof for the purpose of improving the very early delaying effect of concrete, and the oxalic acid and/or metallic salts thereof can be used to adjust the very early delaying effect in accordance with the change in the very early delaying effect due to the difference in the materials used at the work site. As used in the present invention, one or more kinds selected from the group consisting of oxalic acid and/or metallic salts thereof are preferably 0.5 to 10% by mass of the total liquid accelerator.

The liquid accelerator of the present invention utilizes 15 to 35% by mass of aluminum sulfate, 1 to 5% by mass of hydrofluoric acid, not more than 20% by mass of aluminum hydroxide, 0.5 to 5% by mass of phosphorous acid and/or organic acid salts thereof, preferably and 0.5 to 10% by mass of oxalic acid and/or metallic salts thereof for the total liquid accelerator.

The liquid accelerator of the present invention may contain C₁ to C₁₀ organic monocarboxylic and dicarboxylic acids and one or more metallic salts thereof for the purpose of improving the early strength of concrete. The C₁ to C₁₀ organic monocarboxylic and dicarboxylic acids and metallic salts thereof may be preferably formic acid, oxalic acid, and glycol acid as well as the metallic salts thereof, and other acids such as acetic acid, propionic acid, succinic acid, citric acid and tartaric acid may also be used. Moreover, a preferable proportion of these components is 1 to 10% by mass, and more preferably 2 to 8% by mass of the total liquid accelerator

Furthermore, to improve the solution stability, the liquid accelerator of the present invention may utilize the combination of one or more kinds of alkanolamine, alkylene diamine, and alkylene triamine. These components are preferably ethylenediamine, ethylenetriamine, diethanolamine or triethanolamine, and more preferably diethanolamine. These components may be contained preferably in a proportion of 0.1 to 10% by mass, and more preferably 0.1 to 8% by mass of the total liquid accelerator.

The liquid accelerator of the present invention can be prepared in a simple manner by mixing in any order and stirring the above explained components to eventually have a pH of 2 to 8 and contain 40 to 70% by mass of water.

The suitable use of the liquid accelerator of the present invention is to add the liquid accelerator of the present invention into a cement composition such as mortar or concrete applied to conventional dry or wet spraying process. In using the liquid accelerator of the present invention, it may be added in an amount of 5 to 12% by mass with respect to the mass of the cement in the cement composition, although the amount will vary depending on the applications.

The present invention is a process of dry or wet spraying wherein the above described liquid accelerator is added to a cement composition such as mortar or concrete inside a transfer pipe, a watering nozzle, or a spraying nozzle either directly to the mixture by means of an accelerator feed device, or to the water content.

Moreover, the present invention is a process of spraying wherein the liquid accelerator is added by a method shown in [0030] to the base mortar or concrete to be applied to the spraying process wherein the base mortar or concrete is added with a high-range AE water-reducing agent and/or a retarder of polycarboxylic acid base.

The high-range AE water-reducing agent of polycarboxylic acid base of the present invention may be any commercially available one for general-purpose uses. Commercially available high-range AE water-reducing agents of polycarboxylic acid base includes: polycarboxylic acid base cement water-reducing agent having polyalkylene oxide group such as one in JP,A,58-38380 (copolymer of polyethylene glycol methacrylate and methacrylic acid), JP,A,62-70250(copolymer of polyethylene glycol methacrylate, methacrylic acid, and amino-compound adduct having polyalkylene oxide of unsaturated carboxylic acid); and ones in JP,A,05-213644 (copolymer of polyethylene glycol methacrylate and methacrylic acid), JP,A,05-238795 (copolymer selected from polyalkylene glycol diester base monomers having unsaturated bonds, acrylic acid base monomers and polyalkylene glycol monoester monomers having unsaturated bond) JP,A,09-286645 (copolymer of polyethylene glycol, of which oxyethylene group has different chain lengths of 1 to 10 and 11 to 100, and methacrylic acid), Japanese Patent No.2541218 (copolymer of polyoxyalkylene derivatives and maleic anhydride) JP,A,07-215746 (copolymer of polyoxyalkylene derivatives and maleic anhydride), JP,A,05-310458 (copolymer of alkenyl ether and maleic anhydride), JP,A,04-74748 (copolymer of olefins of carbon number 2 to 8 and ethylene-base unsaturated dicarboxylic anhydride), JP,A,62-83344 (metallic complex with polyacrylic acid or copolymers of olefins of carbon number 2 to 8 and ethylene-base unsaturated dicarboxylic acid etc.), JP,A,2001-180998 (concrete admixture which contains copolymer mixture which is obtained by copolymerizing a specific monomer (A) such as ehylene-base unsaturated carboxylic derivatives having polyoxyalkylene group, and another specific monomer (B) such as (metha) acrylic acid, and in which the molar ratio (A)/(B) is changed at least once during the reaction), JP,B,06-99169 (polyethylene-imine compound consisting of poly (acidic group substituted alkyl group and/or acidic group substituted acyl group)polyethylene-imine and poly(acidic group substituted alkyl group and carbamoyl alkyl group)polyethylene-imine), JP,A,08-283350 (oxyalkyleneglycol-alkenyl ether and unsaturated dicarboxylic acid derivatives and vinyl-base polyalkyleneglycol compounds, polysiloxane compounds or ester compounds), JP,A,2000-351820 (containing a copolymer based on unsaturated monocarboxylic derivatives or dicarboxylic derivatives and oxyalkyleneglycol-alkenyl ether group).

The retarder in the present invention may be exemplified by phosphonic acid derivatives selected from the group consisting of aminotri(methylenephosphonic acid), aminotri(methylenephosphonic acid) 5 sodium salt, 1-hydroxyethylydene-1,1-diphosphonic acid, 1-hydroxyethylydene-1,1-diphosphonic acid 4 sodium salt, ethylenediaminetetra(methylenephosphonic acid), ethylenediaminetetra (methylenephosphonic acid) calcium/sodium salt, hexamethylene-diaminetetra(methylenephosphonic acid), hexamethylene-diaminetetra(methylenephosphonic acid) potassium salt, diethylenetriaminepenta(methylenephosphonic acid), and diethylenetriaminepenta(methylenephosphonic acid) sodium salt; and hydroxycarbonic acid and the salts thereof selected from salicylic acid, citric acid, lactic acid, gluconic acid, tartaric acid, muconic acid, and glucoheptanoic acid. Preferable retarder may be exemplified by ones containing phosphonic acid derivatives and citric acid and/or gluconic acid, and the salts thereof.

### [Examples]

Hereinafter, the present invention will be explained in detail referring to test examples 1 to 5. The materials, the composition of the mortar, and the measurement method used for the tests are shown in Table 1, and A/F, A/S, components and compositions of the comparative samples and inventive samples used as the accelerator for the test are shown in Table 2.

**[Table 1]**

| | | |
|---|---|---|
| Cement | Ordinary portland cement manufactured by TAIHEIYO CEMENT Co. | |
| Fine aggregate | OI River System pit sand | |
| High-range AE water-reducing agent | NT-1000 (Manufactured by NMB Co., Ltd.) Polycarboxylic acid base | |
| Comparative sample 1 - 3 | Used in the amount of 9% by weight for the cement mass | |
| Inventive sample 1-14 | Used in the amount of 9% by weight for the cement mass | |
| Mortar composition 1 | Water/cement ratio (W/C) = 40%, sand/cement ratio (S/C) = 2.1 | |
| Mortar composition 2 | Water/cement ratio (W/C) = 50%, sand/cement ratio (S/C) = 2.45 | |
| Measurement method | Setting time | Starting time: Time needed for the Proctor penetration resistance value to reach 3.5 N/mm² |
| | Compressive strength | In accordance with JIS R 5201 |
| | Very early delaying effect | By visual observation |

### [Table 2]

**Table 2**

| Accelerator type | A/F | A/S | Composition of accelerator (%) | | | | | |
|---|---|---|---|---|---|---|---|---|
| | | | Al₂(SO₄)₃ | Al(OH)₃ | HF | (COOH)₂· 2H₂O | H₃PO₃ | Na₂SO₄ |
| Comparative sample 1 | 0.84 | 0.38 | 18.2 | 5.4 | 2.1 | 6.7 | 0 | 10.0 |
| Comparative sample 2 | 0.86 | 0.54 | 26.0 | 7.2 | 2.8 | 0 | 0 | 0 |
| Comparative sample 3 | 0.86 | 0.54 | 26.0 | 7.2 | 2.8 | 3.0 | 0 | 0 |
| Inventive sample 1 | 0.86 | 0.54 | 26.0 | 7.2 | 2.8 | 0 | 2.0 | 0 |
| Inventive sample 2 | 0.86 | 0.54 | 26.0 | 7.2 | 2.8 | 3.0 | 1.0 | 0 |
| Inventive sample 3 | 0.86 | 0.54 | 26.0 | 7.2 | 2.8 | 3.0 | 2.0 | 0 |
| Inventive sample 4 | 2.16 | 0.45 | 27.5 | 4.3 | 1.0 | 0 | 1.0 | 0 |
| Inventive sample 5 | 1.08 | 0.45 | 27.5 | 4.3 | 2.0 | 0 | 1.0 | 0 |
| Inventive sample 6 | 0.72 | 0.45 | 27.5 | 4.3 | 3.0 | 0 | 1.0 | 0 |
| Inventive sample 7 | 0.54 | 0.45 | 27.5 | 4.3 | 4.0 | 0 | 1.0 | 0 |
| Inventive sample 8 | 0.43 | 0.45 | 27.5 | 4.3 | 5.0 | 0 | 1.0 | 0 |
| Inventive sample 9 | 0.85 | 0.35 | 27.2 | 1.1 | 2.0 | 0 | 1.0 | 0 |
| Inventive sample 10 | 0.85 | 0.40 | 24.7 | 2.2 | 2.0 | 0 | 1.0 | 0 |
| Inventive sample 11 | 0.85 | 0.44 | 23.2 | 3.2 | 2.1 | 0 | 1.0 | 0 |
| Inventive sample 12 | 0.85 | 0.50 | 21.2 | 4.7 | 2.2 | 0 | 1.0 | 0 |
| Inventive sample 13 | 0.85 | 0.54 | 20.0 | 5.6 | 2.2 | 0 | 1.0 | 0 |
| Inventive sample 14 | 0.85 | 0.69 | 16.7 | 8.2 | 2.4 | 0 | 1.0 | 0 |

### (Test example 1)

Test results for the case in which phosphorous acid and oxalic acid were added to the liquid accelerator according to mortar composition 2 are shown in Table 4. It is clearly seen from Table 4 that the inventive samples 2 and 3 showed an improved accelerating effect and early strength development characteristics.

### (Test example 2)

Using the concrete composition shown in Table 3, a thick-coating capability test of sprayed concrete was conducted. Concrete spraying was conducted onto the top end of a tunnel until an exfoliation occurred and the average thickness of the sprayed concrete was measured. Also the state inside the concrete spray nozzle was checked by visual observation. The amount of accelerator used was 9% by weight with respect to the mass of cement.

**[Table 3]**

| W/C (%) | s/a | Mass per unit volume (kg/m³) | | | |
|---|---|---|---|---|---|
| | | W | C | S | G |
| 56 | 60 | 202 | 360 | 1020 | 699 |

As shown in Table 4, inventive samples 2 and 3, in which phosphorous acid and oxalic acid were used in combination, showed improvements in the thick-coating capability of sprayed concrete. Also, the state inside the concrete spray nozzle was good as no cured concrete remained on the inner wall surface of the nozzle. The inventive sample 1 showed an improvement in the thick-coating capability of sprayed concrete; but a small amount of cured concrete was observed on the inner wall surface of the concrete spray nozzle. Neither of the comparative sample 1 and 2 showed an improvement in the thick-coating capability.

**[Table 4]**

| Accelerator Type | A/F | A/S | Al₂O₃ (%) | SO₄²⁻ (%) | HF (%) | (COOH)₂· 2H₂O (%) | H₃PO₃ (%) | Mortar Test | | | Concrete Test | | |
|---|---|---|---|---|---|---|---|---|---|---|---|---|---|
| | | | | | | | | Setting time | Compressive strength (N/mm²) | | Very early delaying effect | Sprayed thickness (cm) | Inner surface of nozzle |
| | | | | | | | | Start time (min.-sec.) | 3 hours | 24 hours | | | |
| Comparative sample 1 | 0.84 | 0.38 | 9.0 | 22.2 | 2.1 | 6.7 | - | 25-00 | 0.54 | 4.24 | Excessive | 15 | ○ |
| Comparative sample 2 | 0.86 | 0.54 | 12.5 | 21.9 | 2.8 | - | - | 6-30 | 0.61 | 2.82 | Insufficient | 20 | × |
| Comparative sample 3 | 0.86 | 0.54 | 12.5 | 21.9 | 2.8 | 3.0 | - | 5-00 | 0.81 | 2.72 | Good | 28 | ○ |
| Inventive sample 1 | 0.86 | 0.54 | 12.5 | 21.9 | 2.8 | - | 2.0 | 5-30 | 0.83 | 2.85 | Insufficient | 30 | Δ |
| Inventive sample 2 | 0.86 | 0.54 | 12.5 | 21.9 | 2.8 | 3.0 | 1.0 | 5-00 | 0.89 | 2.75 | Good | 31 | ○ |
| Inventive sample 3 | 0.86 | 0.54 | 12.5 | 21.9 | 2.8 | 3.0 | 2.0 | 5-00 | 0.72 | 3.12 | Good | 37 | ○ |

| | | | | | | | | | | | | | |
|---|---|---|---|---|---|---|---|---|---|---|---|---|---|
| Evaluation method of the state of the inner wall surface of the spray nozzle ○: No cured-concrete on the wall surface Δ: Small amount of cured concrete on the wall surface ×: Blocked by the cured concrete on the wall surface | | | | | | | | | | | | | |

### (Test example 3)

The results of the solution stability test are shown in Table 5. The liquid accelerators were stored for two months under temperature conditions of 2, 5, 20, 30, and 40 °C. The inventive samples showed good solution stability for a long period of time at low temperatures and high temperatures.

**[Table 5]**

| Accelerator Type | Environment temperature (°C) | Number of days | | | | |
|---|---|---|---|---|---|---|
| | | 1 week | 2 weeks | 3 weeks | 1 month | 2 months |
| Comparative sample 1 | 2 | ○ | ○ | X | X | X |
| | 5 | ○ | ○ | ○ | X | X |
| | 20 | ○ | ○ | ○ | ○ | ○ |
| | 30 | ○ | ○ | ○ | ○ | ○ |
| | 40 | ○ | ○ | ○ | ○ | ○ |
| Comparative sample 2 | 2 | ○ | ○ | ○ | ○ | ○ |
| | 5 | ○ | ○ | ○ | ○ | ○ |
| | 20 | ○ | ○ | ○ | ○ | ○ |
| | 30 | ○ | ▲ | ▲ | ▲ | ▲ |
| | 40 | ▲ | ▲ | ▲ | ▲ | ▲ |
| Comparative sample 3 | 2 | ○ | ○ | ○ | ○ | ○ |
| | 5 | ○ | ○ | ○ | ○ | ○ |
| | 20 | ○ | ○ | ○ | ○ | ○ |
| | 30 | ○ | ▲ | ▲ | ▲ | ▲ |
| | 40 | ▲ | ▲ | ▲ | ▲ | ▲ |
| Inventive sample 1 | 2 | ○ | ○ | ○ | ○ | ○ |
| | 5 | ○ | ○ | ○ | ○ | ○ |
| | 20 | ○ | ○ | ○ | ○ | ○ |
| | 30 | ○ | ○ | ○ | ○ | ○ |
| | 40 | ○ | ○ | ○ | ○ | ○ |
| Inventive sample 2 | 2 | ○ | ○ | ○ | ○ | ○ |
| | 5 | ○ | ○ | ○ | ○ | ○ |
| | 20 | ○ | ○ | ○ | ○ | ○ |
| | 30 | ○ | ○ | ○ | ▲ | ▲ |
| | 40 | ○ | ○ | ▲ | ▲ | ▲ |
| Inventive | 2 | ○ | ○ | ○ | ○ | ○ |
| sample 3 | 5 | ○ | ○ | ○ | ○ | ○ |
| | 20 | ○ | ○ | ○ | ○ | ○ |
| | 30 | ○ | ○ | ○ | ○ | ○ |
| | 40 | ○ | ○ | ○ | ○ | ○ |

| | | | | | | |
|---|---|---|---|---|---|---|
| Evaluation method:○ good, ▲ clouded, × crystal precipitation | | | | | | |

### (Test example 1)

The results of the mortar test in mortar composition 1 are shown in Table 7 for the cases in which the A/F ratio of the liquid accelerator was varied from 0.43 to 2.16. As seen in Table 7, when the A/F of the liquid accelerator was 0.43, the 24-hour strength development was small; when A/F was 2.16, the start time was delayed; and when in a range of 0.54 to 1.08, well balanced development characteristics was seen in the start time, the 3-hour material age, and the 24-hour material age.

The results of the mortar test in mortar composition 1 are shown in Table 8 for the cases in which the A/S ratio of the liquid accelerator was varied from 0.35 to 0.69. As seen in Table 8, when the A/S of the liquid accelerator was 0.35, the start time was delayed; when A/S was 0.69, the 24-hour strength development was small; and when in a range of 0.40 to 0.54, well balanced development characteristics was seen in the start time, the 3-hour material age, and the 24-hour material age.

### (Test example 2)

Using the concrete compositions shown in Table 6, a thick-coating capability test of sprayed concrete was conducted. Concrete spraying was conducted on the top end of a tunnel until an exfoliation occurred and the average thickness of the sprayed concrete was measured. Also, the state of the concrete spray nozzle was checked by visual observation. The use amount of accelerators was 9% by weigh with respect to the cement mass.

**[Table 6]**

| W/C (%) | s/a | Mass per unit volume (kg/m³) | | | |
|---|---|---|---|---|---|
| | | W | C | S | G |
| 42.2 | 60 | 190 | 450 | 991 | 678 |

As shown in Table 7, when the A/F of the accelerators was in a range of 0.54 to 1.08, improvements in the thick-coating capability were observed and the state of the concrete spray nozzle was in a good condition as no cured concrete remained on the inner wall surface of the nozzle.

**[Table 7]**

| Accelerator Type | A/F | A/S | Al₂O₃ (%) | SO₄²⁻ (%) | HF (%) | H₃PO₃ (%) | Mortar Test | | | Concrete Test | | |
|---|---|---|---|---|---|---|---|---|---|---|---|---|
| | | | | | | | Setting time | Compressive strength (N/mm²) | | Very early delaying effect | Sprayed thickness (cm) | Inner surface of nozzle |
| | | | | | | | Start time (min.-sec.) | 3 hours | 24 hours | | | |
| Inventive sample 4 | 2.16 | 0.45 | 11.0 | 23.1 | 1.0 | 1.0 | 10-00 | 1.05 | 13.5 | Insufficient | 15 | Δ |
| Inventive sample 5 | 1.08 | 0.45 | 11.0 | 23.1 | 2.0 | 1.0 | 8-30 | 1.27 | 12.2 | Good | 30 | ○ |
| Inventive sample 6 | 0.72 | 0.45 | 11.0 | 23.1 | 3.0 | 1.0 | 8-00 | 1.28 | 11.4 | Good | 33 | ○ |
| Inventive sample 7 | 0.54 | 0.45 | 11.0 | 23.1 | 4.0 | 1.0 | 8-00 | 1.33 | 10.2 | Good | 25 | ○ |
| Inventive sample 8 | 0.43 | 0.45 | 11.0 | 23.1 | 5.0 | 1.0 | 8-00 | 1.41 | 7.66 | Excessive | 20 | ○ |

| | | | | | | | | | | | | |
|---|---|---|---|---|---|---|---|---|---|---|---|---|
| Evaluation method of the state of the inner wall surface of the spray nozzle ○: No cured concrete on the wall surface Δ: Small amount of cured concrete on the wall surface ×: Blocked by the cured concrete on the wall surface | | | | | | | | | | | | |

**[Table 8]**

| Accelerator Type | A/F | A/S | Al₂O₃ (%) | SO₄²⁻ (%) | HF (%) | H₃PO₃ (%) | Mortar Test | | |
|---|---|---|---|---|---|---|---|---|---|
| | | | | | | | Setting time | Compressive strength (N/mm²) | |
| | | | | | | | Start (min.-sec.) | 3 hours | 24 hours |
| Inventive sample 9 | 0.85 | 0.35 | 8.5 | 22.9 | 2.0 | 1.0 | 14-00 | 1.15 | 13.4 |
| Inventive sample 10 | | 0.40 | 8.8 | 20.7 | 2.0 | | 11-30 | 1.29 | 12.7 |
| Inventive sample 11 | | 0.44 | 9.0 | 19.5 | 2.1 | | 10-30 | 1.34 | 12.6 |
| Inventive sample 12 | | 0.50 | 9.4 | 17.8 | 2.2 | | 10-00 | 1.45 | 10.1 |
| Inventive sample 13 | | 0.54 | 9.6 | 16.8 | 2.2 | | 9-00 | 1. 62 | 8.89 |
| Inventive sample 14 | | 0.69 | 10.3 | 14.1 | 2.4 | | 7-30 | 1.53 | 5.94 |

### [Industrial Applicability]

According to the present invention, there is provided a liquid accelerator which excels in its accelerating effect, thick-coating capability, strength development characteristics, and the workability of concrete spray nozzle for compositions of a low cement content (C = 360 to 390 kg/m³) and which also excels in the storage stability at low temperatures and high temperatures for a long period of time.

## Claims

1. A liquid accelerator composed of a fluoride-containing aqueous aluminum complex, which is obtained through the reaction of 15 to 35 % by mass of aluminum sulfate, 1 to 5 % by mass of hydrofluoric acid, less than 20 % by mass of aluminum hydroxide, and 0.5 to 5 % by mass of phosphorous acid and/or organic acid salts thereof, which are used for the total amount of the liquid accelerator.

2. The liquid accelerator according to claim 1, wherein total alkali is less than 1 %.

3. The liquid accelerator according to any of claims 1 to 2, wherein oxalic acid and/or metallic salts are contained.

4. The liquid accelerator according to claim 3, **characterized in that** 0.5 to 10 % by mass of oxalic acid and/or metallic salts thereof are used for the total amount of the liquid accelerator.

5. The liquid accelerator according to any of claims 1 to 4, wherein a further source of SO₃ is one or more kinds of sulfuric acids, lithium sulfates, sodium sulfates, and potassium sulfates.

6. The liquid accelerator according to any of claims 1 to 5, wherein one or more members selected from the group consisting of C₁ to C₁₀ organic monocarboxylic and dicarboxylic acids and metallic salts thereof are contained.

7. The liquid accelerator according to any of claims 1 to 6, wherein one or more members selected from the group consisting of alkanolamine, alkylene diamine, and alkylene triamine are contained.

8. The use of the liquid accelerator according to any of claims 1 to 7 for sprayed mortar or concrete applied to a dry or wet spraying process.

9. A process of dry or wet spraying wherein the liquid accelerator according to any of claims 1 to 7 is added to a cement composition such as mortar or concrete in a transport pipe, a watering nozzle, or a spray nozzle either directly to the mixture by means of an accelerator feed device, or to the water content.

10. A process of dry or wet spraying **characterized in that** the liquid accelerator according to any of claims 1 to 7 is added to base mortar or concrete which is added with a high-range AE water-reducing agent and/or a retarder of polycarbonic acid base and which is applied to the spraying process.

## Patentansprüche

1. Flüssiger Beschleuniger, zusammengesetzt aus einem fluoridhaltigen wässrigen Aluminiumkomplex, der durch die Reaktion von 15 bis 35 Masse-% Aluminiumsulfat, 1 bis 5 Masse-% Fluorwasserstoffsäure, weniger als 20 Masse-% Aluminiumhydroxid und 0,5 bis 5 Masse-% Phosphorsäure und/oder organischen Säuresalzen davon erhalten ist, die für die gesamte Menge des flüssigen Beschleunigers verwendet werden.

2. Flüssiger Beschleuniger gemäß Anspruch 1, worin der Gesamt-Alkaligehalt weniger als 1 % beträgt.

3. Flüssiger Beschleuniger gemäß einem der Ansprüche 1 bis 2, worin Oxalsäure und/oder Metallsalze enthalten sind.

4. Flüssiger Beschleuniger gemäß Anspruch 3, **dadurch gekennzeichnet, dass** für die Gesamtmenge des flüssigen Beschleunigers 0,5 bis 10 Masse-% an Oxalsäure und/oder Metallsalze davon verwendet werden.

5. Flüssiger Beschleuniger gemäß einem der Ansprüche 1 bis 4, worin eine weitere Quelle von SO₃ eine oder mehrere Arten von Schwefelsäuren, Lithiumsulfaten, Natriumsulfaten und Kaliumsulfaten ist.

6. Flüssiger Beschleuniger gemäß einem der Ansprüche 1 bis 5, worin ein oder mehrere Elemente ausgewählt aus der Gruppe bestehend aus organischen C₁- bis C₁₀-Monocarbonsäuren und Dicarbonsäuren und deren Metallsalzen enthalten sind.

7. Flüssiger Beschleuniger gemäß einem der Ansprüche 1 bis 6, worin ein oder mehrere Elemente ausgewählt aus der Gruppe bestehend aus Alkanolamin, Alkylendiamin und Alkylentriamin enthalten sind.

8. Verwendung des flüssigen Beschleunigers gemäß einem der Ansprüche 1 bis 7 für Sprühmörtel oder -beton, angewendet auf ein Trocken- oder Nasssprühverfahren.

9. Verfahren zum Trocken- oder Nasssprühen, wobei der flüssige Beschleuniger gemäß einem der Ansprüche 1 bis 7 zu einer Zementzusammensetzung, wie z. B. Mörtel oder Beton, in einem Transportrohr, einer Wässerungsdüse oder einer Sprühdüse zugegeben wird, entweder direkt zu dem Gemisch mithilfe einer Beschleunigerzufuhrvorrichtung oder zu dem Wasseranteil.

10. Verfahren zum Trocken- oder Nasssprühen, **dadurch gekennzeichnet, dass** der flüssige Beschleuniger gemäß einem der Ansprüche 1 bis 7 zu einem Grundmörtel oder -beton zugegeben wird, mit einem High-Range-AE-Wasserverringerungsmittel und/oder einem Verzögerer auf Polykohlensäurebasis zugegeben wird und bei dem Sprühverfahren angewendet wird.

## Revendications

1. Accélérateur liquide composé d'un complexe aqueux d'aluminium contenant l'ion fluorure, qui est obtenu par la réaction de 15 à 35 % en masse de sulfate d'aluminium, 1 à 5 % en masse d'acide fluorhydrique, moins de 20 % en masse d'hydroxyde d'aluminium et 0,5 à 5 % en masse d'acide phosphoreux et/ou de sels d'acide organique de celui-ci, qui sont utilisés pour la quantité totale de l'accélérateur liquide.

2. Accélérateur liquide selon la revendication 1, dans lequel l'alcali total est inférieur à 1 %.

3. Accélérateur liquide selon l'une quelconque des revendications 1 à 2, dans lequel de l'acide oxalique et/ou des sels métalliques sont contenus.

4. Accélérateur liquide selon la revendication 3, **caractérisé en ce que** 0,5 à 10 % en masse d'acide oxalique et/ou de sels métalliques de celui-ci sont utilisés pour la quantité totale de l'accélérateur liquide.

5. Accélérateur liquide selon l'une quelconque des revendications 1 à 4, dans lequel une autre source de SO₃ est une ou plusieurs sortes d'acides sulfuriques, de sulfates de lithium, de sulfates de sodium et de sulfates de potassium.

6. Accélérateur liquide selon l'une quelconque des revendications 1 à 5, dans lequel un ou plusieurs éléments choisis dans le groupe constitué par les acides monocarboxyliques et dicarboxyliques organiques en C₁ à C₁₀ et les sels métalliques de ceux-ci sont contenus.

7. Accélérateur liquide selon l'une quelconque des revendications 1 à 6, dans lequel un ou plusieurs éléments choisis dans le groupe constitué par une alcanolamine, une alkylènediamine et une alkylènetriamine sont contenus.

8. Utilisation de l'accélérateur liquide selon l'une quelconque des revendications 1 à 7 pour du mortier ou béton projeté appliqué à un procédé de projection à sec ou en voie humide.

9. Procédé de projection à sec ou en voie humide dans lequel l'accélérateur liquide selon l'une quelconque des revendications 1 à 7 est ajouté à une composition de ciment telle que du mortier ou du béton dans un tuyau de transport, une buse de mouillage ou une buse de projection soit directement au mélange au moyen d'un dispositif d'introduction d'accélérateur, soit à la teneur en eau.

10. Procédé de projection à sec ou en voie humide **caractérisé en ce que** l'accélérateur liquide selon l'une quelconque des revendications 1 à 7 est ajouté à du mortier ou béton de base qui est additionné d'un plastifiant-réducteur d'eau AE de la gamme haute et/ou d'un retardateur à base d'acide polycarbonique et qui est appliqué au procédé de projection.
